# EUROPÄISCHE PATENTSCHRIFT

(11) **EP 3 812 869 B1**
(45) Veröffentlichungstag und Bekanntmachung des Hinweises auf die Patenterteilung: **23.11.2022**
(21) Anmeldenummer: 20201458.5
(22) Anmeldetag: 13.10.2020
(51) Int. Cl.: G05D 1/02, G01C 21/00, G06K 9/00

(54) **VERFAHREN ZUR ERSTELLUNG EINER UMGEBUNGSKARTE FÜR EIN SICH SELBSTTÄTIG FORTBEWEGENDES BODENBEARBEITUNGSGERÄT, SOWIE SYSTEM AUS ZWEI SICH SELBSTTÄTIG FORTBEWEGENDEN BODENBEARBEITUNGSGERÄTEN**
METHOD FOR CREATING AN ENVIRONMENT MAP FOR AN AUTOMATICALLY MOVING EARTH WORKING DEVICE, AND SYSTEM COMPRISING TWO AUTOMATICALLY MOVING EARTH WORKING DEVICES
PROCÉDÉ D'ÉTABLISSEMENT D'UNE CARTE D'ENVIRONNEMENT POUR UN APPAREIL DE TRAITEMENT DU SOL AUTONOME, AINSI QU'UN SYSTÈME DE DEUX APPAREILS DE TRAITEMENT DU SOL AUTONOME

(30) Priorität: 25.10.2019 DE 102019128927
(43) Veröffentlichungstag der Anmeldung: 28.04.2021
(73) Patentinhaber: Vorwerk & Co. Interholding GmbH, 42275 Wuppertal (DE)
(72) Erfinder: Mosebach, Andrej, 59425 Unna (DE); Papenheim, Marc, 42349 Wuppertal (DE); Hayn, Henning, 40723 Hilden (DE)
(74) Vertreter: Müller, Enno

(56) Entgegenhaltungen:
- DE-A1-102017 104 428
- US-A1- 2015 032 260
- SCHUSTER MARTIN J ET AL: "Multi-robot 6D graph SLAM connecting decoupled local reference filters", 2015 IEEE/RSJ INTERNATIONAL CONFERENCE ON INTELLIGENT ROBOTS AND SYSTEMS (IROS), IEEE, 28. September 2015 (2015-09-28), Seiten 5093-5100, XP032832362, DOI: 10.1109/IROS.2015.7354094 [gefunden am 2015-12-11]
- CARLETTI C ET AL: "A distributed Transferable Belief Model for collaborative topological map-building in multi-robot systems", INTELLIGENT ROBOTS AND SYSTEMS (IROS), 2010 IEEE/RSJ INTERNATIONAL CONFERENCE ON, IEEE, PISCATAWAY, NJ, USA, 18. Oktober 2010 (2010-10-18), Seiten 554-560, XP031920638, DOI: 10.1109/IROS.2010.5651379 ISBN: 978-1-4244-6674-0
- WEIJUN XU ET AL: "Map alignment based on PLICP algorithm for multi-robot SLAM", INDUSTRIAL ELECTRONICS (ISIE), 2012 IEEE INTERNATIONAL SYMPOSIUM ON, IEEE, 28. Mai 2012 (2012-05-28), Seiten 926-930, XP032199841, DOI: 10.1109/ISIE.2012.6237213 ISBN: 978-1-4673-0159-6
- HULETSKI ARTHUR ET AL: "The artificial landmark design for mobile robots localization and mapping", 14TH CONFERENCE OF OPEN INNOVATION ASSOCIATION FRUCT, FRUCT OY, 20. April 2015 (2015-04-20), Seiten 56-61, XP032783201, ISSN: 2305-7254, DOI: 10.1109/FRUCT.2015.7117971 [gefunden am 2015-06-03]
- Howard Andrew: "Multi-robot Simultaneous Localization and Mapping using Particle Filters", INTERNATIONAL JOURNAL OF ROBOTICS RESEARCH., vol. 25, no. 12, 1 December 2006 (2006-12-01), pages 1243-1256, XP055831690, US ISSN: 0278-3649, DOI: 10.1177/0278364906072250 Retrieved from the Internet: URL:https://journals.sagepub.com/doi/pdf/1 0.1177/0278364906072250>
- Howard Andrew ET AL: "Experiments with a Large Heterogeneous Mobile Robot Team: Exploration, Mapping, Deployment and Detection", INTERNATIONAL JOURNAL OF ROBOTICS RESEARCH., vol. 25, no. 5-6, 2 May 2006 (2006-05-02), pages 431-447, XP055831654, US ISSN: 0278-3649, DOI: 10.1177/0278364906065378 Retrieved from the Internet: URL:http://journals.sagepub.com/doi/pdf/10 .1177/0278364906065378>

## Beschreibung

### Gebiet der Technik

Die Erfindung betrifft ein Verfahren zur Erstellung einer Umgebungskarte für ein sich selbsttätig fortbewegendes Bodenbearbeitungsgerät, wobei ein erstes Bodenbearbeitungsgerät erste Merkmalsdaten einer Umgebung detektiert und zu einer ersten Umgebungskarte verarbeitet, wobei ein zweites Bodenbearbeitungsgerät zweite Merkmalsdaten der Umgebung detektiert und zu einer zweiten Umgebungskarte verarbeitet, wobei die erste Umgebungskarte und die zweite Umgebungskarte zu einer gemeinsamen Umgebungskarte kombiniert werden, wobei dass das erste Bodenbearbeitungsgerät ein Objekt anhand einer eindeutigen Kennung des Objektes als einen dem ersten Bodenbearbeitungsgerät bekannten Ankerpunkt der Umgebung identifiziert und eine relative Positionsinformation des Ankerpunktes in einem Koordinatensystem der ersten Umgebungskarte speichert, wobei das zweite Bodenbearbeitungsgerät dasselbe Objekt als einen dem zweiten Bodenbearbeitungsgerät bekannten Ankerpunkt erkennt und eine relative Positionsinformation des Ankerpunktes in einem Koordinatensystem der zweiten Umgebungskarte speichert, und wobei die erste Umgebungskarte und die zweite Umgebungskarte anhand der darin enthaltenen relativen Positionsinformationen des Ankerpunktes zu einer gemeinsamen globalen Umgebungskarte kombiniert werden, und wobei die eindeutige Kennung ein das Objekt eindeutig identifizierender Code ist, nämlich ein optischer Code, ein elektronischer Code, ein magnetischer Code, eine Formkodierung und/oder eine Farbkodierung.

Des Weiteren betrifft die Erfindung ein System aus zumindest einem ersten sich selbsttätig fortbewegenden Bodenbearbeitungsgerät und einem zweiten sich selbsttätig fortbewegenden Bodenbearbeitungsgerät.

### Stand der Technik

Sich selbsttätig fortbewegende Bodenbearbeitungsgeräte sind im Stand der Technik hinreichend bekannt. Die Patentschrift EP 2 330 471 B1 offenbart beispielsweise einen selbsttätig verfahrbaren Kehr- und/oder Saugroboter, welcher eine Umgebungskarte erstellt und abspeichert. Die Umgebungskarte wird mittels einer Messeinrichtung des Roboters durch Erfassen von Umgebungsdaten und anschließende Datenverarbeitung erzeugt. In der Umgebungskarte sind Raumbegrenzungen und Hindernisse gespeichert, so dass anhand der Umgebungskarte eine günstige Verfahrstrategie des Roboters, beispielsweise zum Reinigen einer Bodenfläche, erarbeitet werden kann.

Des Weiteren ist aus der DE 10 2017113 612 A1 ein Verfahren zur Erstellung einer dreidimensionalen Umgebungskarte für ein Reinigungssystem bekannt, wobei zumindest zwei Teilbereiche der Umgebung mittels eines Sensorsystems erfasst werden, wobei zwei die jeweiligen Teilbereiche repräsentierende Datensätze, beispielsweise Umgebungskarten, an eine zentrale Speichereinrichtung übertragen werden, und wobei eine dreidimensionale Umgebungskarte durch Zusammenführen der Teilbereiche erstellt wird. Zu diesem Zweck wird ein gemeinsamer Überschneidungsbereich der beiden Teilbereiche in Bezug auf charakteristische Merkmale der Umgebung analysiert, die dann dazu verwendet werden, die Datensätze der Teilbereiche zusammenzuführen.

Des Weiteren ist aus den Veröffentlichungen Schuster Martin et al. "Multi-Robot 6D Graph SLAM Connecting Decoupled Local Reference Filters", Carletti et al. "A distributed Transferable Belief Model for collaborative topological map-building in Multi-Robot Systems" und Weijun et al. "Map Alignment Based on PLICP Algorithm for Multi-robot SLAM" jeweils ein Verfahren zur gemeinsamen Erstellung einer Umgebungskarte durch mehrere Roboter eines Robotersystems offenbart. Die Veröffentlichung Huletski et al. "The Artificial Landmark Design for Mobile Robots Localization and Mapping" offenbart beispielsweise die Verwendung von sogenannten "Landmarks" zur Lokalisation und Kartenerstellung eines mobilen Roboters im Rahmen eines SLAM-Verfahrens. Die "Landmarks" beruhen auf der Basis von QR-Codes.

Obwohl ein Verfahren der vorgenannten Art zufriedenstellende Ergebnisse liefert, wenn eine ausreichende Anzahl charakteristischer Merkmale in den Datensätzen der Umgebungsteilbereiche gefunden wird, ist eine Zusammenführung der Teilbereiche zu einer gemeinsamen Umgebungskarte erschwert, wenn demgegenüber nur sehr wenige charakteristische Merkmale zur Verfügung stehen.

### Zusammenfassung der Erfindung

Es ist daher Aufgabe der Erfindung, ein Verfahren zur Erstellung einer kombinierten Umgebungskarte für ein sich selbsttätig fortbewegendes Bodenbearbeitungsgerät zu schaffen, welches auch dann optimale Ergebnisse liefert, wenn der sich überlappende Bereich der Teilkarten gering ist.

Zur Lösung der vorgenannten Aufgabe schlägt die Erfindung vor, dass das erste Bodenbearbeitungsgerät das zweite Bodenbearbeitungsgerät detektiert und ein Anfragesignal an das zweite Bodenbearbeitungsgerät übermittelt, wobei das Anfragesignal des ersten Bodenbearbeitungsgerätes eine Umgebungsdetektion durch das zweite Bodenbearbeitungsgerät initiiert und das zweite Bodenbearbeitungsgerät als Reaktion auf das Anfragesignal seine Umgebung erkundet und das erste Bodenbearbeitungsgerät detektiert, wobei sich die Bodenbearbeitungsgeräte gegenseitig anhand ihrer Kennungen identifizieren, und wobei in der erstellten globalen Umgebungskarte zu mindestens einem Umgebungsteilbereich eine Berechtigungsinformation gespeichert ist, die angibt, welches Bodenbearbeitungsgerät den Umgebungsteilbereich kartieren oder nicht kartieren darf. Erfindungsgemäß ist ein Bodenbearbeitungsgerät des Systems somit selbst ein Ankerpunkt, d. h. ein Objekt, welches durch eine eindeutige Kennung identifizierbar ist. Das eindeutige Erkennen des Bodenbearbeitungsgerätes wird durch eine Kommunikation zwischen mehreren Bodenbearbeitungsgeräten unterstützt. Wenn zum Beispiel ein erstes Bodenbearbeitungsgerät ein zweites Bodenbearbeitungsgerät anhand dessen äußerer Gestalt als Bodenbearbeitungsgerät erkennt, kann es ein Anfragesignal an die Umgebung (ohne bestimmten Empfänger) oder gezielt an dieses Bodenbearbeitungsgerät senden, um eine Umgebungsdetektion durch dieses Bodenbearbeitungsgerät zu initiieren. Dasjenige Bodenbearbeitungsgerät von mehreren Bodenbearbeitungsgeräten des Systems, welches in seiner näheren Umgebung auf die Anfrage reagiert, ist damit identifiziert. Damit wissen beide Bodenbearbeitungsgeräte, welches Bodenbearbeitungsgerät sich derzeit in der Umgebung befindet.

Zwei oder auch mehr sich selbsttätig fortbewegende Bodenbearbeitungsgeräte erstellen jeweils eine eigene Umgebungskarte, die als lokale Umgebungskarte ausgebildet ist und ein auf das jeweilige Bodenbearbeitungsgerät bezogenes Koordinatensystem aufweist. Die Umgebungskarten werden dann auf bekannte Ankerpunkte hin analysiert, die durch Objekte repräsentiert werden, welche eine eindeutige Kennung aufweisen. Eine eindeutige Kennung im Sinne der Erfindung identifiziert das Objekt eindeutig, so dass eine Auswerteeinrichtung des Bodenbearbeitungsgerätes das Objekt als einen bekannten Ankerpunkt der Umgebung identifizieren kann. Die jeweilige Umgebungskarte eines Bodenbearbeitungsgerätes wird dann um die Positionsinformation des Objektes und gegebenenfalls weitere Informationen zu dem aufgefundenen Ankerpunkt ergänzt, beispielsweise einen Name oder eine ID. Die Positionsinformation wird vorzugsweise als Koordinatenangabe des Ankerpunktes in dem Koordinatensystem der Umgebungskarte gespeichert. Eine solche Ergänzung der Umgebungskarte wird für mehrere, zumindest zwei Bodenbearbeitungsgeräte, des Systems durchgeführt, wobei in jeder Umgebungskarte Ankerpunkte, welche das jeweilige Bodenbearbeitungsgerät erkannt hat, markiert werden. Die von den Bodenbearbeitungsgeräten detektierten Objekte stimmen dabei zumindest teilweise überein, wobei in beiden Umgebungskarten zumindest ein Ankerpunkt identisch vorhanden sein muss. Zu den eindeutig identifizierten Ankerpunkten zählen nicht nur Objekte außerhalb der Bodenbearbeitungsgeräte. Vielmehr sind die Bodenbearbeitungsgeräte selbst auch Ankerpunkte, auch bezogen auf die eigene Umgebungskarte des Bodenbearbeitungsgerätes. Die Umgebungskarten der Bodenbearbeitungsgeräte werden erfindungsgemäß auf der Basis identischer Ankerpunkte zusammengeführt, wobei überprüft wird, insbesondere anhand einer Korrelationsanalyse, ob die Umgebungskarten zu einander passen und somit zu einer gemeinsamen globalen Umgebungskarte kombiniert werden können. Die Kombination der Umgebungskarten erfolgt durch das Identifizieren eines Ankerpunktes, welcher gleichermaßen sowohl in der ersten Umgebungskarte des ersten Bodenbearbeitungsgerätes, als auch in der zweiten Umgebungskarte des zweiten Bodenbearbeitungsgerätes vorhanden ist. Da die Umgebungskarten der Bodenbearbeitungsgeräte jeweils relative Umgebungskarten sind, die eigene Koordinatensysteme verwenden und auf einen gerätespezifischen Ursprung bezogen sind, müssen die Umgebungskarten zunächst in Bezug auf deren Koordinatensysteme zueinander ausgerichtet werden. Dabei werden die identisch in beiden Umgebungskarten vorhandenen Ankerpunkte übereinander gelegt und als neuer Ankerpunkt für die gemeinsame globale Umgebungskarte definiert. Die in den jeweiligen Umgebungskarten des Weiteren enthaltenen Merkmalsdaten der Umgebung werden relativ zu dem neuen Ankerpunkt der globalen Umgebungskarte gespeichert, so dass die entstehende gemeinsame globale Umgebungskarte aus einer Schnittmenge der beiden Umgebungskarten und Umgebungskartenteilbereichen besteht, die nur in der ersten oder zweiten Umgebungskarte enthalten waren. Im Gegensatz zum Stand der Technik ist es nicht erforderlich, dass die einzelnen Umgebungskarten der Bodenbearbeitungsgeräte einen besonders großen Überlappungsbereich mit möglichst vielen charakteristischen Merkmalen aufweisen. Vielmehr reicht es aus, wenn die Umgebungskarten nur einen gemeinsamen identischen Ankerpunkt aufweisen und die räumliche Orientierung des jeweiligen Bodenbearbeitungsgerätes relativ zu dem Ankerpunkt, insbesondere einen die Kennung aufweisenden Teilbereich des Ankerpunktes, bekannt ist. Mit der Erfindung wird somit erreicht, dass eine gemeinsame globale Umgebungskarte für mehrere Roboter besonders schnell und ohne die Notwendigkeit einer großen übereinstimmenden Merkmalsanzahl in der Umgebung erstellt wird. Die Umgebungskarten mehrerer Bodenbearbeitungsgeräte werden auf der Basis der Erkennung eindeutig definierter Objekte, die Fixpunkte in der Umgebung, aber auch Bodenbearbeitungsgeräte oder Basisstationen für diese sein können, zusammengeführt.

Zur Ausführung des Verfahrens verfügt ein Nutzer über mehrere Bodenbearbeitungsgeräte, die verschiedenartig oder gleichartig sein können. Bei den Bodenbearbeitungsgeräten kann es sich beispielsweise um Saugroboter, Wischroboter, Mähroboter, Bohnerroboter, Polierroboter oder Mischformen dieser handeln. Die sich selbsttätig fortbewegenden Bodenbearbeitungsgeräte sind in der Lage, eine eigene Umgebungskarte der Umgebung zu erstellen. Darüber hinaus weiß jedes Bodenbearbeitungsgerät vorzugsweise, wie viele und welche weiteren Bodenbearbeitungsgeräte dem verwendeten System angehören, insbesondere wie viele und welche Bodenbearbeitungsgeräte an einer gemeinsamen Bodenbearbeitungsaufgabe beteiligt sind. Beispielsweise verfügt der Nutzer über ein mobiles Endgerät, insbesondere ein Mobiltelefon, einen Tablet-Computer oder ähnliches, auf welchem eine Applikation gespeichert ist, in welcher er die verwendeten Bodenbearbeitungsgeräte registriert. Sofern der Nutzer eine Bodenbearbeitung initiieren möchte, gibt er in der Applikation an, welche der registrierten Bodenbearbeitungsgeräte für die Bodenbearbeitung genutzt werden sollen. Durch die Datenzusammenführung in der Applikation ist somit, insbesondere auch den Bodenbearbeitungsgeräten selbst, bekannt, welche Bodenbearbeitungsgeräte an einer Bodenbearbeitungsaufgabe beteiligt sind. In der Applikation ist dabei vorzugsweise auch eine Information darüber hinterlegt, wie viele Bodenbearbeitungsgeräte an einer Bodenbearbeitungsaufgabe beteiligt sind, und um welche Gerätearten es sich handelt. Entsprechend können Gerätetypen in der Applikation angegeben sein. Es ist für den Arbeitsbetrieb der Bodenbearbeitungsgeräte nicht erforderlich, dass zu diesem Zeitpunkt bereits eine Umgebungskarte der zu bearbeitenden Fläche vorliegt. Auch müssen die Bodenbearbeitungsgeräte initial noch keine Kenntnisse darüber haben, wo in der Umgebung sich welches Bodenbearbeitungsgerät gerade aufhält. Diese Informationen können erst während des Arbeitsbetriebs gesammelt werden. Die erfindungsgemäß erstellte globale Umgebungskarte der Umgebung kann grundsätzlich auf der Basis von Umgebungskarten erstellt werden, die entweder während eines Bodenbearbeitungsvorganges aufgenommen wurden, oder die während beispielsweise einer reinen Erkundungsfahrt erstellt wurden.

Es wird vorgeschlagen, dass das Bodenbearbeitungsgerät seine Umgebungskarte an eine den Bodenbearbeitungsgeräten gemeinsam zugeordnete Datenbank eines externen Servers und/oder eines anderen Bodenbearbeitungsgerätes übermittelt, wobei eine der Datenbank zugeordnete Recheneinrichtung die Umgebungskarten in Bezug auf darin enthaltene Ankerpunkte analysiert, einen in mehreren Umgebungskarten gespeicherten gleichen Ankerpunkt erkennt und die Umgebungskarten gemäß der relativen Positionsinformationen des gleichen Ankerpunktes übereinanderlegt. Die Erstellung der globalen Umgebungskarte kann somit entweder auf einem externen Server, beispielsweise in einer sogenannten "Cloud", oder in einem Bodenbearbeitungsgerät erstellt werden. Zu diesem Zweck werden die Umgebungskarten der jeweiligen Bodenbearbeitungsgeräte dann an das zuständige Bodenbearbeitungsgerät oder den externen Server übermittelt, in der dortigen Datenbank gespeichert und in Bezug auf darin enthaltene bekannte Ankerpunkte analysiert. Sofern die Recheneinrichtung bei der Analyse feststellt, dass die Umgebungskarten zweier oder auch mehrerer Bodenbearbeitungsgeräte identische Ankerpunkte beinhalten, werden die betreffenden Umgebungskarten gemäß der relativen Positionsinformationen dieses Ankerpunktes, welche in den Umgebungskarten gespeichert sind, übereinander gelegt, um die globale Umgebungskarte zu schaffen. Dabei werden die Koordinatensysteme beider Bodenbearbeitungsgeräte zusammengeführt und folglich ihre lokalen Umgebungskarten zu einer gemeinsamen globalen Umgebungskarte zusammengeführt. Damit das beschriebene Vorgehen funktioniert, sind die identifizierbaren Ankerpunkte bekannt, nämlich identifizierbar durch deren eindeutige individuelle Kennung. Insbesondere kann die Datenbank eine Tabelle aufweisen, die bekannte Ankerpunkte enthält.

Es wird vorgeschlagen, dass die Datenbank Informationen über einen oder mehrere in der Umgebung vorhandene Ankerpunkte aufweist, und dass die in der Datenbank gespeicherten Informationen für einen Vergleich mit in einer Umgebungskarte vorhandenen Objekten herangezogen werden. Anhand der in der Datenbank gespeicherten Informationen, nämlich der eindeutigen Kennungen von Objekten, wird die Umgebungskarte analysiert, wobei in der Umgebungskarte vorhandene Objekte dahingehend geprüft werden, ob es sich bei diesen um definierte Ankerpunkte handelt, die dem System bekannt sind.

Es wird vorgeschlagen, dass die eindeutige Kennung ein das Objekt eindeutig identifizierender Code ist. Insbesondere kann der Code ein optischer Code, ein elektronischer Code, ein magnetischer Code, eine Formkodierung und/oder eine Farbkodierung sein. Entsprechend der Art der eindeutigen Kennung kann diese mittels einer geeigneten Detektionseinrichtung des Bodenbearbeitungsgerätes detektiert werden. Die Detektionseinrichtung kann insbesondere eine Kamera, ein Laserscanner oder eine elektronische und/oder magnetische Sende-/Empfangseinrichtung sein. Die eindeutige Kennung kann insbesondere ein QR-Code oder ein anderweitig eindeutig gestalteter Marker sein, der an dem Objekt angeordnet ist, aufgebracht ist oder auf diesem angezeigt wird. Als Alternative können beispielsweise auch elektronische Tags verwendet werden, die die eindeutige Kennung gespeichert haben. Diese Tags funktionieren vorzugsweise auf der Basis von RFID, NFC, Bluetooth-Beacons oder ähnlichem. Entsprechend der Art der vorhandenen Kennung weist das Bodenbearbeitungsgerät eine zum Auslesen geeignete Detektionseinrichtung auf. Die Detektionseinrichtung liest die eindeutige Kennung des Objektes aus und übermittelt die darin enthaltenen Informationen an eine Recheneinrichtung, welche daraufhin einen entsprechenden Vermerk in der erstellten Umgebungskarte vornimmt. Anhand der enthaltenen Informationen können schließlich die in der Datenbank gespeicherten Kennungen der bekannten Ankerpunkte mit den Kennungen der detektierten Objekte verglichen werden, um zu ermitteln, ob es sich bei einem detektierten Objekt tatsächlich um einen bekannten Ankerpunkt der Umgebung handelt.

Das die Kennung aufweisende Objekt kann beispielsweise selbst ein Bodenbearbeitungsgerät sein, oder eine, eine Servicetätigkeit für ein Bodenbearbeitungsgerät bereitstellende Basisstation, oder ein ortsfestes Element eines Wohnraumes der Umgebung, beispielsweise ein Teilbereich eines Fensters, einer Tür, eines Möbelstücks oder eines Wandbildes. Im Sinne einer Basisstation für ein Bodenbearbeitungsgerät werden beispielsweise solche Stationen verstanden, die einen Akkumulator des Bodenbearbeitungsgerätes laden können, Sauggut von dem Bodenbearbeitungsgerät übernehmen können, eine Säuberung des Bodenbearbeitungsgerätes vornehmen können, Zubehör für das Bodenbearbeitungsgerät bereithalten, oder ähnliches. Dazu gehören beispielsweise auch Frischwasserstationen, Absaugstationen oder ähnliches. In diesem Sinne kann es sich bei den Objekten um solche handeln, die ohnehin zu dem erfindungsgemäßen Bodenbearbeitungssystem gehören, nämlich entweder Bodenbearbeitungsgeräte oder Basisstationen für diese sind. Alternativ kommen jedoch auch Fixpunkte in der Umgebung in Frage, die üblicherweise nicht von einem Nutzer verschoben werden, insbesondere Fenster, Türen, schwere Möbelstücke, Wandbilder oder ähnliches.

Eine alternative Identifikation eines Ankerpunktes kann beispielsweise dadurch erfolgen, dass ein Bodenbearbeitungsgerät eine Basisstation eines anderen Bodenbearbeitungsgerätes detektiert und dann anhand eines Vergleiches der Umgebungskarten mehrerer in dem zugehörigen Bereich befindlichen Bodenbearbeitungsgeräte ermittelt, um welche Basisstation es sich handelt. Zum Beispiel kann ein erstes Bodenbearbeitungsgerät mit der Erstellung einer lokalen Umgebungskarte beginnen und eine ihm zugeordnete Basisstation innerhalb der erstellten Umgebungskarte abspeichern. Wenn nun ein zweites Bodenbearbeitungsgerät während eines Bodenbearbeitungsbetriebs oder auch einer reinen Erkundungsfahrt eine Basisstation detektiert, können die aktuell detektierten Umgebungsinformationen dieses zweiten Bodenbearbeitungsgerätes mit der Umgebungskarte des ersten Bodenbearbeitungsgerätes abgeglichen werden, um eine Ausrichtung der Umgebungskarten relativ zueinander anhand der jeweils enthaltenen Basisstation zu erreichen.

Des Weiteren kann vorgesehen sein, dass in der erstellten globalen Umgebungskarte zu mindestens einem Umgebungsteilbereich eine Berechtigungsinformation gespeichert ist, die angibt, welches Bodenbearbeitungsgerät den Umgebungsteilbereich durchqueren oder nicht durchqueren darf. In der Umgebungskarte werden somit Informationen darüber hinterlegt, welche Umgebungsteilbereiche, die in der globalen Umgebungskarte verzeichnet sind, von einem bestimmten Bodenbearbeitungsgerät befahren werden dürfen, und welche nicht. Anhand derartiger in der Umgebungskarte gespeicherter Berechtigungsinformationen kann eine Arbeitsstrategie definiert werden, die ausschließt, dass ein bestimmter Umgebungsteilbereich mehrfach durch unterschiedliche Bodenbearbeitungsgeräte bearbeitet wird. Die Umgebung wird somit derart aufgeteilt, dass die Bodenbearbeitungsgeräte nach Möglichkeit nicht gleiche Bereiche bearbeiten. Ebenso können derartige Berechtigungsinformationen auch dazu genutzt werden, einzelnen Bodenbearbeitungsgeräten Umgebungsteilbereiche zuzuweisen, die von diesem erneut kartographiert werden sollen. Hintergrund ist, dass die Bodenbearbeitungsgeräte vorzugsweise nicht gleiche Umgebungsteilbereiche kartographieren sollen, um bei der Erstellung bzw. Aktualisierung der globalen Umgebungskarte Zeit zu sparen. In diesem Sinne ist erfindungsgemäß vorgesehen, dass in der erstellten globalen Umgebungskarte zu mindestens einem Umgebungsteilbereich eine Berechtigungsinformation gespeichert ist, die angibt, welches Bodenbearbeitungsgerät den Umgebungsteilbereich kartieren oder nicht kartieren darf. Bevor ein Bodenbearbeitungsgerät eine Fortbewegung durch die Umgebung, insbesondere zum Zwecke einer Bodenbearbeitung oder Erstellung/Aktualisierung einer Umgebungskarte startet, kann es zunächst anhand der globalen Umgebungskarte abfragen, welche Berechtigungen ihm dazu zugeteilt sind, d. h. welche Umgebungsteilbereiche der Umgebung von ihm befahren und/oder kartiert werden dürfen.

Das Verfahren sieht schließlich vor, dass das Bodenbearbeitungsgerät bzw. die mehreren Bodenbearbeitungsgeräte nach der Erstellung der gemeinsamen globalen Umgebungskarte anhand dieser navigieren. Die lokale Umgebungskarte des jeweiligen Bodenbearbeitungsgerätes wird somit durch die gemeinsame globale Umgebungskarte ersetzt.

Des Weiteren wird mit der Erfindung ein System aus zumindest einem ersten sich selbsttätig fortbewegenden Bodenbearbeitungsgerät und einem zweiten sich selbsttätig fortbewegenden Bodenbearbeitungsgerät vorgeschlagen, wobei die Bodenbearbeitungsgeräte ausgebildet sind, ein zuvor beschriebenes erfindungsgemäßes Verfahren auszuführen. Die erläuterten Merkmale und Vorteile des Verfahrens ergeben sich somit entsprechend auch für das erfindungsgemäße System. Neben zwei oder mehr Bodenbearbeitungsgeräten kann das System des Weiteren auch ein oder mehrere eine eindeutige Kennung aufweisende Objekte beinhalten, wobei sich diese Objekte von den Bodenbearbeitungsgeräten unterscheiden. Bei den eine eindeutige Kennung aufweisenden Objekten des Systems kann es sich somit einerseits um ein Bodenbearbeitungsgerät handeln, oder andererseits alternativ oder zusätzlich auch um eine Basisstation für ein Bodenbearbeitungsgerät, ein anderes Objekt der Umgebung, wie beispielsweise Möbelstücke, Fernseher, Vasen, Blumen, Bilder, Türen, Fenster, oder ähnliches.

### Kurze Beschreibung der Zeichnungen

Im Folgenden wird die Erfindung anhand von Ausführungsbeispielen näher erläutert. Es zeigen:
- Fig. 1: ein System mit zwei Bodenbearbeitungsgeräten,
- Fig. 2: ein skizzierter Verfahrensablauf zum Erstellen einer globalen Umgebungskarte aus zwei lokalen Umgebungskarten der Bodenbearbeitungsgeräte.

### Beschreibung der Ausführungsformen

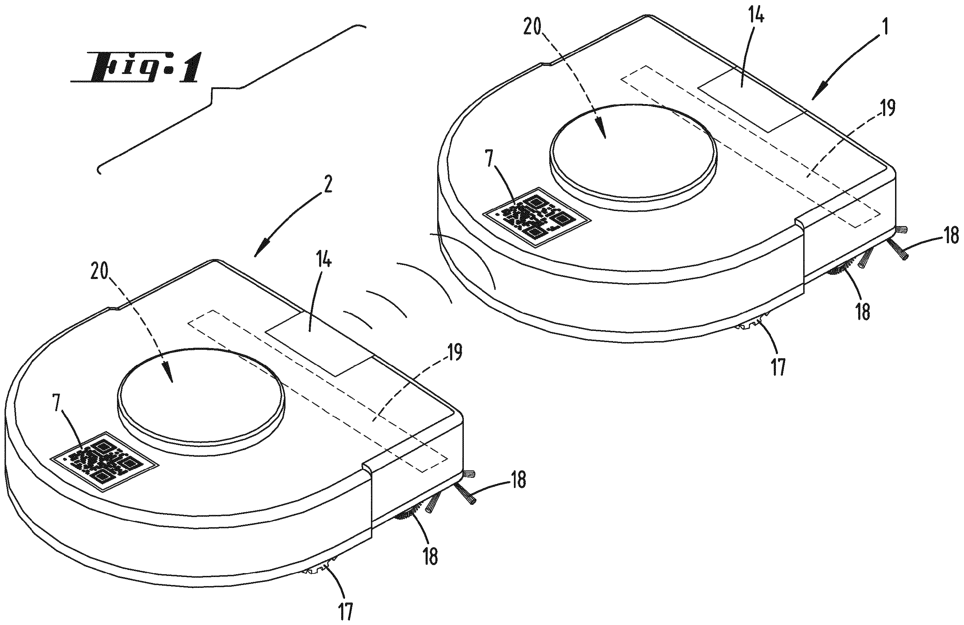

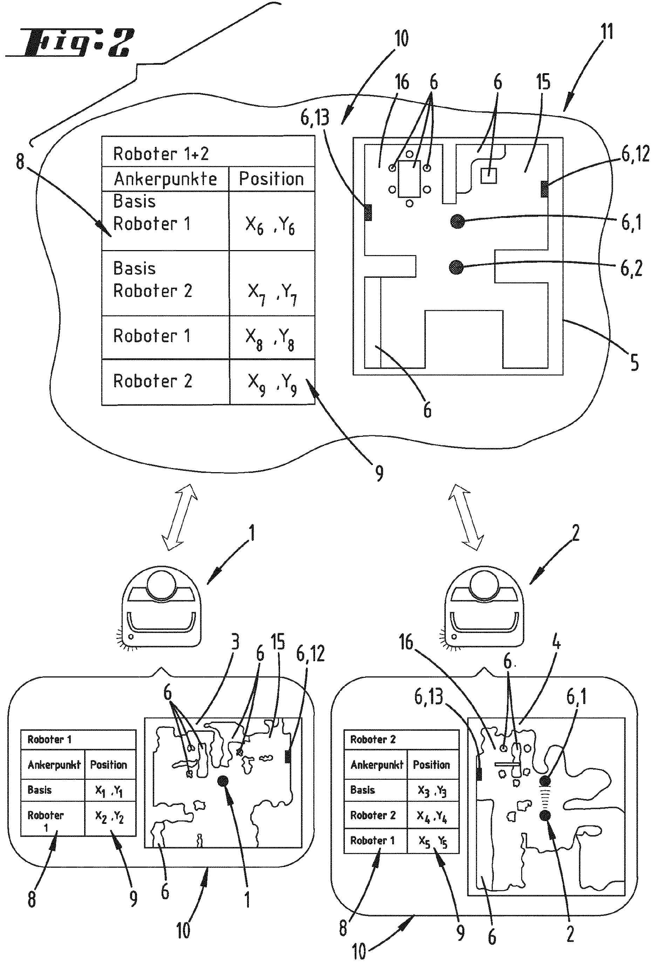

Figur 1 zeigt ein System aus zwei Bodenbearbeitungsgeräten 1, 2, die hier beispielsweise als mobile Reinigungsgeräte ausgebildet sind. Jedes der Bodenbearbeitungsgeräte 1, 2 verfügt über eine Navigationseinrichtung 20, die beispielsweise eine Abstandsmesseinrichtung, insbesondere einen Laserabstandssensor, aufweist. Die Navigationseinrichtung 20 detektiert Abstände zu Objekten 6 (siehe Figur 2) innerhalb der Umgebung des jeweiligen Bodenbearbeitungsgerätes 1, 2 und erstellt daraus eine Umgebungskarte 3, 4. Die Objekte 6 können einerseits Wände, Fenster, Türzargen, Türflügel, Einrichtungsgegenstände, Möbel und dergleichen sein, und andererseits Objekte 6, die zu dem System der Bodenbearbeitungsgeräte 1, 2 gehören, nämlich hier die Bodenbearbeitungsgeräte 1, 2 selbst sowie Basisstationen 12, 13 für diese. Beispielsweise kann der Abstandssensor eine Laserdiode aufweisen, deren emittierter Lichtstrahl über eine Umlenkeinrichtung aus einem Gehäuse des Bodenbearbeitungsgerätes 1, 2 herausgeführt ist und um eine in der üblichen Gebrauchsstellung des Bodenbearbeitungsgerätes 1, 2 senkrechte Rotationsachse rotierbar ist, insbesondere mit einem Messwinkel von 360°. Dadurch ist eine Rundum-Abstandsmessung möglich. Mithilfe des Abstandssensors kann die Umgebung des Bodenbearbeitungsgerätes 1, 2 somit in einer bevorzugt horizontalen Ebene vermessen werden, d. h. in einer zu der zu reinigenden Fläche im Wesentlichen parallelen Ebene. Dadurch kann das Bodenbearbeitungsgerät 1, 2 unter Vermeidung von Kollisionen mit Objekten 6 in der Umgebung bewegt werden. Die erstellte Umgebungskarte 3, 4 dient auch zur Selbstlokalisierung des Bodenbearbeitungsgerätes 1, 2 innerhalb der eigenen Umgebungskarte 3, 4 sowie davon ausgehend einer Navigation innerhalb der Umgebung.

Jede Umgebungskarte 3, 4 enthält die detektierten Objekte 6 in einem lokalen Koordinatensystem des Bodenbearbeitungsgerätes 1, 2. Der Ursprung des lokalen Koordinatensystems kann vorzugsweise mit einem Punkt des Bodenbearbeitungsgerätes 1, 2 zusammenfallen. Das Bodenbearbeitungsgerät 1, 2 weist des Weiteren elektromotorisch angetriebene Räder 17 auf, mit deren Hilfe sich das Bodenbearbeitungsgerät 1, 2 über eine zu reinigende Fläche fortbewegen kann. Des Weiteren befinden sich Reinigungselemente 18, hier beispielsweise rotierende Bürsten, unterhalb des Bodenbearbeitungsgerätes 1, 2. Die Reinigungselemente 18 sind vorteilhaft einem Saugmund 19 zugeordnet, über welchen das Bodenbearbeitungsgerät 1, 2 mit Sauggut beaufschlagte Luft einsaugen kann. Hierfür verfügt das Bodenbearbeitungsgerät 1, 2 des Weiteren über eine nicht näher dargestellte Motor-Gebläse-Einrichtung. Für die Elektroversorgung elektrischer Verbraucher des Bodenbearbeitungsgerätes 1, 2, wie beispielsweise für den Antrieb der Räder 17 und der Reinigungselemente 18, weist das Bodenbearbeitungsgerät 1, 2 einen nicht dargestellten, wiederaufladbaren Akkumulator auf.

Die Bodenbearbeitungsgeräte 1, 2 verfügen des Weiteren über eine individuelle eindeutige Kennung 7, welche das jeweilige Bodenbearbeitungsgerät 1, 2 eindeutig identifiziert. Diese Kennung 7 ist hier lediglich beispielsweise ein optischer Code, beispielsweise ein QR-Code. Selbstverständlich sind alternativ auch andere Arten von Kennungen 7 möglich, insbesondere auch andere optische Kennungen 7, jedoch auch elektronische, magnetische oder sonstige Kennungen 7. Wesentlich ist, dass die Kennung 7 das jeweilige Bodenbearbeitungsgerät 1, 2 eindeutig identifiziert. Hier sind die Kennungen 7 der Bodenbearbeitungsgeräte 1, 2 auf einer Gehäuseoberseite so angeordnet, dass eine optisehe Detektionseinrichtung 14, nämlich ein Laserscanner, des jeweils anderen Bodenbearbeitungsgerätes 1, 2 die Kennung 7 auslesen und das Bodenbearbeitungsgerät 1, 2 identifizieren kann. Zu diesem Zweck verfügen die Bodenbearbeitungsgeräte 1, 2 über einen Speicher 10 mit einer Datei, innerhalb welcher die Kennungen 7 mehrerer Bodenbearbeitungsgeräte 1, 2 des Systems hinterlegt sind. Der Speicher 10 kann entweder ein lokaler Speicher 10 des jeweiligen Bodenbearbeitungsgerätes 1, 2 sein, oder auch ein zentraler Speicher 10 eines Servers 11 des Systems. Der Speicher 10 weist des Weiteren, insbesondere der lokalen Umgebungskarte 3, 4 des jeweiligen Bodenbearbeitungsgerätes 1, 2 zugeordnet, Informationen über Bezeichnungen 8 und Positionsinformationen 9 anderer eindeutig identifizierter Objekte 6 der Umgebung auf. Objekte 6, die das Bodenbearbeitungsgerät 1, 2 detektiert und identifiziert hat, dienen als Ankerpunkte bei der Kartenerstellung und Navigation des Bodenbearbeitungsgerätes 1, 2. Dies wird mit Bezug zu Figur 2 erläutert.

Figur 2 zeigt schematisch ein Zusammenwirken der beiden Bodenbearbeitungsgeräte 1, 2 des Systems zur Erstellung einer globalen Umgebungskarte 5, welche beide Bodenbearbeitungsgeräte 1, 2 für spätere Reinigungsfahrten nutzen können. Das System kann neben den beispielhaft dargestellten Bodenbearbeitungsgeräten 1, 2 noch weitere (nicht dargestellte) Bodenbearbeitungsgeräte aufweisen. Hiervon bleiben die Erfindung sowie die Funktionsweise des Verfahrens unberührt. Das hier dargestellte System zur Reinigung einer Umgebung umfasst neben den beiden Bodenbearbeitungsgeräten 1, 2 zwei Basisstationen 12, 13, wobei eine erste Basisstation 12 dem ersten Bodenbearbeitungsgerät 1 zugeordnet ist, und wobei eine zweite Basisstation 13 dem zweiten Bodenbearbeitungsgerät 2 zugeordnet ist. Die Basisstationen 12, 13 können Servicetätigkeiten an dem jeweiligen Bodenbearbeitungsgerät 1, 2 vollziehen, beispielsweise den Akkumulator des Bodenbearbeitungsgerätes 1, 2 aufladen, oder auch alternativ oder zusätzlich Sauggut aus einer Sauggutkammer des Bodenbearbeitungsgerätes 1, 2 entfernen, Zubehör für das Bodenbearbeitungsgerät 1, 2 zur Verfügung stellen oder ähnliches. Das System umfasst des Weiteren einen externen Server 11, hier eine sogenannte "Cloud", mit einem zentralen Speicher 10.

Dem System kann des Weiteren ein nicht dargestelltes mobiles Endgerät, beispielsweise ein Mobiltelefon, ein Tablet-Computer, ein Laptop oder ähnliches zugeordnet sein, auf welchem eine Applikation installiert ist, die dem Nutzer des Systems die Möglichkeit eröffnet, das System zu konfigurieren und die Bodenbearbeitungsgeräte 1, 2 zu steuern. Mittels der Applikation kann der Nutzer die Bodenbearbeitungsgeräte 1, 2 sowie auch die Basisstationen 12, 13 registrieren, so dass eine Recheneinrichtung jedes der Bodenbearbeitungsgeräte 1, 2 eine Information darüber hat, welche anderen Bodenbearbeitungsgeräte 1, 2 und Basisstationen 12, 13 in dem System vorhanden sind. Wenn der Nutzer dann mittels der Applikation eine Reinigung durch eines oder mehrere der Bodenbearbeitungsgeräte 1, 2 ausführen lassen möchte, kann er einen entsprechenden Reinigungswunsch in das mobile Endgeräte eingeben, woraufhin dann eine entsprechende Bodenbearbeitung gesteuert wird. Wenn der Nutzer nun beispielsweise einen Reinigungswunsch für beide Bodenbearbeitungsgeräte 1, 2 äußert, startet jedes der Bodenbearbeitungsgeräte 1, 2 entweder unmittelbar eine Reinigungsfahrt, oder alternativ auch zunächst eine Erkundungsfahrt zur Erstellung einer lokalen Umgebungskarte 3, 4. Hier beginnt jedes der Bodenbearbeitungsgeräte 1,2 beispielsweise direkt mit einer Reinigung der Umgebung, wobei gleichzeitig eine lokale persistente Umgebungskarte 3, 4 erstellt wird. Während des Reinigungsvorgangs werden eindeutig zu identifizierende Objekte 6, beispielsweise die jeweilige Basisstation 12, 13 des Bodenbearbeitungsgerätes 1, 2, identifiziert und in der Umgebungskarte 3, 4 des Bodenbearbeitungsgerätes 1, 2 vermerkt. Die eindeutig identifizierten Objekte 6 bilden Ankerpunkte innerhalb der Umgebungskarte 3, 4. Die eigene Position des jeweiligen Bodenbearbeitungsgerätes 1, 2 ist ebenfalls ein Ankerpunkt, welcher in der Umgebungskarte 3, 4 des Bodenbearbeitungsgerätes 1, 2 markiert wird.

Um Objekte 6 innerhalb der Umgebung eindeutig identifizieren zu können, haben diese eine eindeutige Kennung 7, hier nämlich die in Figur 1 dargestellten QR-Codes. Jedes Bodenbearbeitungsgerät 1, 2 verfügt entsprechend über eine Datei mit gespeicherten Kennungen 7 von Objekten 6 der Umgebung, sofern diese als Ankerpunkte dienen sollen.

Wie in Figur 2 dargestellt erstellt das erste Bodenbearbeitungsgerät 1 eine Umgebungskarte 3, in welcher Positionsinformationen 9 über die eigene Position des ersten Bodenbearbeitungsgerätes 1 und über die Position der diesem Bodenbearbeitungsgerät 1 zugeordneten Basisstation 12 markiert sind. Der Umgebungskarte 3 ist eine Tabelle mit Bezeichnungen 8 und Positionsinformationen 9 des ersten Bodenbearbeitungsgerätes 1 und der ersten Basisstation 12 zugeordnet. Allerdings ist es ebenso möglich, dass die Positionsinformationen 9 und Bezeichnungen 8 unmittelbar in der Umgebungskarte 3 eingetragen sind. Auf gleiche Art und Weise erstellt auch das zweite Bodenbearbeitungsgerät 2 eine eigene lokale und persistente Umgebungskarte 4 sowie eine Tabelle. Das zweite Bodenbearbeitungsgerät 2 detektiert bei seiner Fortbewegung durch die Umgebung seine eigene Basisstation 13 sowie hier beispielsweise das erste Bodenbearbeitungsgerät 1. Eine Recheneinrichtung des zweiten Bodenbearbeitungsgerätes 2 erkennt die Basisstation 13 und das erste Bodenbearbeitungsgerät 1 anhand deren spezifischer Kennung 7, wobei die detektierten Kennungen 7 mit in einer Datei hinterlegten definierten Kennungen 7 verglichen werden. Wenn eine Übereinstimmung zwischen einer detektierten Kennung 7 und einer gespeicherten Referenzkennung festgestellt wird, nimmt das Bodenbearbeitungsgerät 2 den identifizierten Objekten 6 zugeordnete Bezeichnungen 8 und Positionsinformationen 9 in die Tabelle auf. Die Bezeichnung 8 des Objektes 6 ist beispielsweise der Kennung 7 des detektierten Objektes 6 entnommen. Die Tabelle enthält des Weiteren auch die eigene Positionsinformation 9 und Bezeichnung 8 des zweiten Bodenbearbeitungsgerätes 2 selbst. Die in der dargestellten Tabelle vermerkten Objekte 6 sowie auch das zweite Bodenbearbeitungsgerät 2 selbst, bilden Ankerpunkte innerhalb der Umgebungskarte 4 des Bodenbearbeitungsgerätes 2. Wie in der Figur dargestellt, unterscheiden sich die Umgebungskarten 3, 4 der Bodenbearbeitungsgeräte 1, 2 dahingehend, dass nicht alle Umgebungsteilbereiche 15, 16 der Umgebung gleichermaßen in beiden Umgebungskarten 3, 4 verzeichnet sind. Um nun eine globale Umgebungskarte 5 zu erstellen, die beide Bodenbearbeitungsgeräte 1, 2 nutzen können, werden die lokalen Umgebungskarten 3, 4 zu einer globalen persistenten gemeinsamen Umgebungskarte 5 zusammengefasst. Dazu übermittelt jedes Bodenbearbeitungsgerät 1, 2 die von ihm erstellte Umgebungskarte 3, 4 an den externen Server 11. Eine Recheneinrichtung des Servers 11 kombiniert die Umgebungskarten 3, 4 anhand der darin enthaltenen relativen Positionsinformationen 9 der Ankerpunkte, d. h. der von den Bodenbearbeitungsgeräten 1, 2 identifizierten Objekte 6, welche über eine eindeutige Kennung 7 verfügen. Dabei werden die lokalen Koordinatensysteme der Umgebungskarten 3, 4 so übereinandergelegt, dass die in den Umgebungskarten 3, 4 identisch vorhandenen Ankerpunkte übereinanderliegen. Daraus ergibt sich dann eine gemeinsame globale Umgebungskarte 5, die alle von den Bodenbearbeitungsgeräten 1, 2 erkundeten Umgebungsteilbereiche 15, 16 enthält.

Nach Erstellung der globalen Umgebungskarte 5 kann ein Nutzer des Systems, beispielsweise über die Applikation, Umgebungsteilbereichen 15, 16 Berechtigungen einzelner Bodenbearbeitungsgeräte 1, 2 zuweisen, um festzulegen, welches Bodenbearbeitungsgerät 1, 2 in welchen Umgebungsteilbereich 15, 16 verfahren darf. Die Berechtigungen können auch genutzt werden, um festzulegen, welches Bodenbearbeitungsgerät 1, 2 im Folgenden welche Umgebungsteilbereiche 15, 16 erkunden und/oder erneut kartographieren darf. Dadurch wird vermieden, dass Umgebungsteilbereiche 15, 16 durch die Bodenbearbeitungsgeräte 1, 2 des Systems mehrfach gereinigt bzw. kartiert werden, was ansonsten zu unnötigem Zeit- und/oder Energieaufwand des Systems führen würde. Bevor ein Bodenbearbeitungsgerät 1, 2 zu einer Bearbeitungsfahrt oder Erkundungsfahrt aufbricht, kann es somit in der erstellten globalen Umgebungskarte 5 abfragen, wie seine Berechtigungen für die Umgebungsteilbereiche 15, 16 der Umgebung sind bzw. für welche Bodenbearbeitungsgeräte 1, 2 Berechtigungen in welchen Umgebungsteilbereichen 15, 16 vorliegen. Danach richtet sich dann die weitere Steuerung der Tätigkeiten des Bodenbearbeitungsgerätes 1, 2.

In dem gezeigten Ausführungsbeispiel erkennt das zweite Bodenbearbeitungsgerät 2 das erste Bodenbearbeitungsgerät 1 anhand dessen Kennung 7. Um das Erkennen von Bodenbearbeitungsgeräten 1, 2 zusätzlich zu unterstützen kann auch eine Kommunikation zwischen den beiden Bodenbearbeitungsgeräten 1, 2 verwendet werden. Wenn das zweite Bodenbearbeitungsgerät 2 beispielsweise das erste Bodenbearbeitungsgerät 1 detektiert und anhand dessen Formgebung erkennt, dass es sich um ein Bodenbearbeitungsgerät 1, 2 handelt, kann das zweite Bodenbearbeitungsgerät 2 ein Anfragesignal in die Umgebung aussenden, welches grundsätzlich alle dort vorhandenen Bodenbearbeitungsgeräte 1, 2 empfangen können. Das erste Bodenbearbeitungsgerät 1, welches als Antwort auf das Anfragesignal dann das zweite Bodenbearbeitungsgerät 2 detektiert, kann das zweite Bodenbearbeitungsgerät 2 anhand dessen Kennung 7 identifizieren. Ebenso können außer Bodenbearbeitungsgeräten 1, 2 auch die Basisstationen 12, 13 der Umgebung verwendet werden, um eine Verbindung zwischen den lokalen Umgebungskarten 3, 4 herzustellen.

Obwohl dies hier nicht separat beschrieben ist, kann der Vergleich zwischen von dem Bodenbearbeitungsgerät 1, 2 detektierten Kennungen 7 und gespeicherten Referenzkennungen auch - anstatt durch die Bodenbearbeitungsgeräte 1, 2 selbst - durch eine Recheneinrichtung des externen Servers 11 durchgeführt werden. Die die Referenzkennungen aufweisende Datei kann ebenfalls auf dem externen Server 11 gespeichert sein.

### Liste der Bezugszeichen

- 1: Bodenbearbeitungsgerät
- 2: Bodenbearbeitungsgerät
- 3: Umgebungskarte
- 4: Umgebungskarte
- 5: Umgebungskarte
- 6: Objekt
- 7: Kennung
- 8: Bezeichnung
- 9: Positionsinformation
- 10: Speicher
- 11: Server
- 12: Basisstation
- 13: Basisstation
- 14: Detektionseinrichtung
- 15: Umgebungsteilbereich
- 16: Umgebungsteilbereich
- 17: Rad
- 18: Reinigungselement
- 19: Saugmund
- 20: Navigationseinrichtung

## Patentansprüche

1. Verfahren zur Erstellung einer Umgebungskarte (3, 4, 5) für ein sich selbsttätig fortbewegendes Bodenbearbeitungsgerät (1, 2), wobei ein erstes Bodenbearbeitungsgerät (1) erste Merkmalsdaten einer Umgebung detektiert und zu einer ersten Umgebungskarte (3) verarbeitet, wobei ein zweites Bodenbearbeitungsgerät (2) zweite Merkmalsdaten der Umgebung detektiert und zu einer zweiten Umgebungskarte (4) verarbeitet, wobei die erste Umgebungskarte (3) und die zweite Umgebungskarte (4) zu einer gemeinsamen Umgebungskarte (5) kombiniert werden, wobei das erste Bodenbearbeitungsgerät (1) ein Objekt (6) anhand einer eindeutigen Kennung (7) des Objektes (6) als einen dem ersten Bodenbearbeitungsgerät (1) bekannten Ankerpunkt der Umgebung identifiziert und eine relative Positionsinformation (9) des Ankerpunktes in einem Koordinatensystem der ersten Umgebungskarte (3) speichert, wobei das zweite Bodenbearbeitungsgerät (2) dasselbe Objekt (6) als einen dem zweiten Bodenbearbeitungsgerät (2) bekannten Ankerpunkt erkennt und eine relative Positionsinformation (9) des Ankerpunktes in einem Koordinatensystem der zweiten Umgebungskarte (4) speichert, und wobei die erste Umgebungskarte (3) und die zweite Umgebungskarte (4) anhand der darin enthaltenen relativen Positionsinformationen (9) des Ankerpunktes zu einer gemeinsamen globalen Umgebungskarte (5) kombiniert werden, und wobei die eindeutige Kennung (7) ein das Objekt (6) eindeutig identifizierender Code ist, nämlich ein optischer Code, ein elektronischer Code, ein magnetischer Code, eine Formkodierung und/oder eine Farbkodierung, **dadurch gekennzeichnet, dass** das erste Bodenbearbeitungsgerät (1) das zweite Bodenbearbeitungsgerät (2) detektiert und ein Anfragesignal an das zweite Bodenbearbeitungsgerät (2) übermittelt, wobei das Anfragesignal des ersten Bodenbearbeitungsgerätes (1) eine Umgebungsdetektion durch das zweite Bodenbearbeitungsgerät (2) initiiert und das zweite Bodenbearbeitungsgerät (2) als Reaktion auf das Anfragesignal seine Umgebung erkundet und das erste Bodenbearbeitungsgerät (1) detektiert, wobei sich die Bodenbearbeitungsgeräte (1, 2) gegenseitig anhand ihrer Kennungen (7) identifizieren, und wobei in der erstellten globalen Umgebungskarte (5) zu mindestens einem Umgebungsteilbereich (15, 16) eine Berechtigungsinformation gespeichert ist, die angibt, welches Bodenbearbeitungsgerät (1, 2) den Umgebungsteilbereich (16) kartieren oder nicht kartieren darf.

2. Verfahren nach Anspruch 1, **dadurch gekennzeichnet, dass** das Bodenbearbeitungsgerät (1, 2) seine Umgebungskarte (3, 4) an eine den Bodenbearbeitungsgeräten (1, 2) gemeinsam zugeordnete Datenbank (10) eines externen Servers (11) und/oder eines anderen Bodenbearbeitungsgerätes (2, 1) übermittelt, wobei eine der Datenbank (10) zugeordnete Recheneinrichtung die Umgebungskarten (3, 4) in Bezug auf darin enthaltene Ankerpunkte analysiert, einen in mehreren Umgebungskarten (3, 4) gespeicherten gleichen Ankerpunkt erkennt und die Umgebungskarten (3, 4) gemäß der relativen Positionsinformationen (9) des gleichen Ankerpunktes übereinanderlegt.

3. Verfahren nach Anspruch 2, **dadurch gekennzeichnet, dass** die Datenbank (10) Informationen über einen oder mehrere in der Umgebung vorhandene Ankerpunkte aufweist, wobei die in der Datenbank (10) gespeicherten Informationen für einen Vergleich mit in einer Umgebungskarte (3, 4) vorhandenen Objekten (6) herangezogen werden.

4. Verfahren nach einem der vorhergehenden Ansprüche, **dadurch gekennzeichnet, dass** die eindeutige Kennung (7) mittels einer Detektionseinrichtung (14) des Bodenbearbeitungsgerätes (1, 2), insbesondere einer Kamera, einem Laserscanner oder einer elektronischen und/oder magnetischen Sende/-Empfangseinrichtung, detektiert wird.

5. Verfahren nach einem der vorhergehenden Ansprüche, **dadurch gekennzeichnet, dass** das die Kennung (7) aufweisende Objekt (6) ein Bodenbearbeitungsgerät (1, 2), eine, eine Servicetätigkeit für ein Bodenbearbeitungsgerät (1, 2) bereitstellende Basisstation (12, 13) oder ein definiertes Element eines Wohnraumes ist.

6. Verfahren nach einem der vorhergehenden Ansprüche, **dadurch gekennzeichnet, dass** in der globalen Umgebungskarte (5) zu mindestens einem Umgebungsteilbereich (15, 16) eine Berechtigungsinformation gespeichert ist, die angibt, welches Bodenbearbeitungsgerät (1, 2) den Umgebungsteilbereich (16) durchqueren oder nicht durchqueren darf.

7. Verfahren nach einem der vorhergehenden Ansprüche, **dadurch gekennzeichnet, dass** das Bodenbearbeitungsgerät (1, 2) nach der Erstellung der gemeinsamen globalen Umgebungskarte (5) anhand dieser navigiert.

8. System aus zumindest einem ersten sich selbsttätig fortbewegenden Bodenbearbeitungsgerät (1) und einem zweiten sich selbsttätig fortbewegenden Bodenbearbeitungsgerät (2), wobei die Bodenbearbeitungsgeräte (1, 2) ausgebildet sind, ein Verfahren nach einem der vorhergehenden Ansprüche auszuführen.

## Claims

1. A method for generating an area map (3, 4, 5) for an automatically moving floor processing device (1, 2), wherein a first floor processing device (1) detects first feature data of an environment and processes them into a first area map (3), wherein a second floor processing device (2) detects second feature data of the environment and processes them into a second area map (4), wherein the first area map (3) and the second area map (4) are combined into a common area map (5), wherein the first floor processing device (1) identifies an object (6) based on a unique identifier (7) of the object (6) as an anchor point of the environment known to the first floor processing device (1), and stores relative positional information (9) of the anchor point in a coordinate system of the first area map (3), wherein the second floor processing device (2) recognizes the same object (6) as an anchor point known to the second floor processing device (2), and stores relative positional information (9) of the anchor point in a coordinate system of the second area map (4), and wherein the first area map (3) and the second area map (4) are combined into a common global area map (5) based on the relative positional information (9) of the anchor point contained therein, and wherein the unique identifier (7) is a code that clearly identifies the object (6), specifically an optical code, an electronic code, a magnetic code, a shape coding and/or a color coding, **characterized in that** the first floor processing device (1) detects the second floor processing device (2) and transmits a request signal to the second floor processing device (2), wherein the inquiry signal of the first floor processing device (1) initiates an environment detection by the second floor processing device (2) and the second floor processing device (2) explores its environment in response to the inquiry signal and detects the first floor processing device (1), wherein the floor processing devices (1, 2) identify each other by means of their identifiers (7), and wherein authorization information is stored in the created global area map (5) for at least one partial environmental area (15, 16), which authorization information indicates which floor processing device (1, 2) may or may not map the partial environmental area (16).

2. The method according to claim 1, **characterized in that** the floor processing device (1, 2) transmits its area map (3, 4) to a database (10) that belongs to an external server (11) and/or some other floor processing device (2, 1) and is jointly allocated to the floor processing devices (1, 2), wherein a computing unit allocated to the database (10) analyzes the area maps (3, 4) with respect to anchor points contained therein, recognizes an identical anchor point stored in several area maps (3, 4), and superposes the area maps (3, 4) according to the relative positional information (9) of the identical anchor point.

3. The method according to claim 2, **characterized in that** the database (10) has information about one or several anchor points present in the environment, wherein the information stored in the database (10) is drawn upon for comparison with objects (6) present in the area map (3, 4) .

4. The method according to one of the preceding claims, **characterized in that** the unique identifier (7) is detected by means of a detection unit (14) of the floor processing device (1, 2), in particular a camera, a laser scanner or an electronic and/or magnetic transmitter/receiver.

5. The method according to one of the preceding claims, **characterized in that** the object (6) having the identifier (7) is a floor processing device (1, 2), or a base station (12, 13) that provides a service activity for a floor processing device (1, 2), or a defined element of a living space.

6. The method according to one of the preceding claims, **characterized in that** the generated global area map (5) stores authorization information for at least one partial environmental area (15, 16), which indicates which floor processing device (1, 2) may or may not pass through the partial environmental area (16).

7. The method according to one of the preceding claims, **characterized in that** the floor processing device (1, 2) navigates according to the common global area map (5) once it has been generated.

8. A system comprised of at least a first automatically moving floor processing device (1) and a second automatically moving floor processing device (2), wherein the floor processing devices (1, 2) are designed to implement a method according to one of the preceding claims.

## Revendications

1. Procédé pour établir une carte d'environnement (3, 4, 5) pour un appareil de travail du sol (1, 2) se déplaçant automatiquement, un premier appareil de travail du sol (1) détectant des premières données caractéristiques d'un environnement et les traitant pour former une première carte d'environnement (3), un deuxième appareil de travail du sol (2) détectant des deuxièmes données caractéristiques de l'environnement et les traitant pour former une deuxième carte d'environnement (4), la première carte d'environnement (3) et la deuxième carte d'environnement (4) étant combinées pour former une carte d'environnement (5) commune, le premier appareil de travail du sol (1) identifiant un objet (6) à l'aide d'une identification univoque (7) de l'objet (6) comme un point d'ancrage de l'environnement connu du premier appareil de travail du sol (1) et mémorisant une information de position relative (9) du point d'ancrage dans un système de coordonnées de la première carte d'environnement (3), dans lequel le deuxième outil de travail du sol (2) identifie le même objet (6) comme un point d'ancrage connu du deuxième outil de travail du sol (2) et stocke une information de position relative (9) du point d'ancrage dans un système de coordonnées de la deuxième carte d'environnement (4), et la première carte d'environnement (3) et la deuxième carte d'environnement (4) étant combinées à l'aide des informations de position relative (9) du point d'ancrage qui y sont contenues pour former une carte d'environnement globale commune (5), et l'identifiant unique (7) étant un code identifiant l'objet (6) de manière univoque, à savoir un code optique, un code électronique, un code magnétique, un code de forme et/ou un code de couleur, **caractérisé en ce que** le premier appareil de travail du sol (1) détecte le deuxième appareil de travail du sol (2) et transmet un signal d'interrogation au deuxième appareil de travail du sol (2), le signal de demande du premier appareil de travail du sol (1) initiant une détection de l'environnement par le deuxième appareil de travail du sol (2) et le deuxième appareil de travail du sol (2) explorant son environnement en réaction au signal de demande et détectant le premier appareil de travail du sol (1), les appareils de travail du sol (1, 2) s'identifient mutuellement à l'aide de leurs identifications (7), et dans lequel une information d'autorisation est mémorisée dans la carte globale d'environnement (5) établie pour au moins une zone partielle d'environnement (15, 16), laquelle indique quel appareil de travail du sol (1, 2) est autorisé ou non à cartographier la zone partielle d'environnement (16).

2. Procédé selon la revendication 1, **caractérisé en ce que** l'appareil de travail du sol (1, 2) transmet sa carte d'environnement (3, 4) à une base de données (10) d'un serveur externe (11) et/ou d'un autre appareil de travail du sol (2, 1), associée en commun aux appareils de travail du sol (1, 2), un dispositif de calcul associé à la banque de données (10) analysant les cartes d'environnement (3, 4) en ce qui concerne les points d'ancrage qu'elles contiennent, reconnaissant un même point d'ancrage enregistré dans plusieurs cartes d'environnement (3, 4) et superposant les cartes d'environnement (3, 4) en fonction des informations de position relative (9) du même point d'ancrage.

3. Procédé selon la revendication 2, **caractérisé en ce que** la base de données (10) comporte des informations sur un ou plusieurs points d'ancrage présents dans l'environnement, les informations stockées dans la base de données (10) étant utilisées pour une comparaison avec des objets (6) présents dans une carte de l'environnement (3, 4).

4. Procédé selon l'une des revendications précédentes, **caractérisé en ce que** l'identifiant unique (7) est détecté au moyen d'un dispositif de détection (14) de l'outil de travail du sol (1, 2), notamment une caméra, un scanner laser ou un dispositif d'émission/réception électronique et/ou magnétique.

5. Procédé selon l'une des revendications précédentes, **caractérisé en ce que** l'objet (6) comportant l'identifiant (7) est un outil de travail du sol (1, 2), une station de base (12, 13) fournissant une activité de service pour un outil de travail du sol (1, 2) ou un élément défini d'un espace habitable.

6. Procédé selon l'une des revendications précédentes, **caractérisé en ce qu'**une information d'autorisation est mémorisée dans la carte d'environnement globale (5) pour au moins une zone partielle d'environnement (15, 16), laquelle indique quel outil de travail du sol (1, 2) est autorisé ou non à traverser la zone partielle d'environnement (16).

7. Procédé selon l'une quelconque des revendications précédentes, **caractérisé en ce que** l'outil de travail du sol (1, 2) navigue à l'aide de la carte globale d'environnement commune (5) après l'établissement de celle-ci.

8. Système constitué d'au moins un premier outil de travail du sol (1) se déplaçant automatiquement et d'un deuxième outil de travail du sol (2) se déplaçant automatiquement, les outils de travail du sol (1, 2) étant adaptés pour mettre en oeuvre un procédé selon l'une quelconque des revendications précédentes.
